# EUROPÄISCHE PATENTANMELDUNG

(11) **EP 3 889 895 A1**
(43) Veröffentlichungstag der Anmeldung: **06.10.2021**
(21) Anmeldenummer: 20167351.4
(22) Anmeldetag: 31.03.2020
(51) Int. Cl.: G06T 7/13

(54) **VERFAHREN ZUR KANTENFINDUNG VON OBJEKTKANTEN EINES MESSOBJEKTES**

(71) Anmelder: Carl Zeiss Industrielle Messtechnik GmbH, 73447 Oberkochen (DE)
(72) Erfinder: Mayr Adam, Ana Carolina, 73430 Aalen (DE); Steinigeweg, Dennis, 49504 Lotte-Wersen (DE); Neumaier, Kilian, 89520 Heidenheim (DE)
(74) Vertreter: Witte, Weller & Partner Patentanwälte mbB

(57) **Zusammenfassung**

Verfahren zur Kantenfindung von Objektkanten (44) eines Messobjektes (14) auf Basis von Bilddaten, das die Schritte aufweist: Empfangen einer Vielzahl von Trainingsdaten von Bildern (42), die jeweils von einem Trainingsobjekt (43) erfasst wurden, wobei das Trainingsobjekt (43) eine Vielzahl von Objektkanten (44) aufweist, die auf Basis von Trainings-Kantenfindungsparametern identifiziert sind; Empfangen von Messbilddaten eines Messbildes (46), das zur Auswertung des Messobjekts (14) erfasst wird, wobei das Messobjekt (14) eine Vielzahl von Objektkanten (44) aufweist; und Ermitteln eines Kantenfindungsmodells zur Kantenfindung zumindest einer der Objektkanten (44) des Messobjekts (14) in dem Messbild (46) auf Basis der Vielzahl von Trainingsdaten mittels maschinengestützten Lernens.

## Beschreibung

Die vorliegende Erfindung betrifft ein Verfahren und eine Vorrichtung zur Kantenfindung von Objektkanten eines Messobjektes auf Basis von Bilddaten. Ferner betrifft die vorliegende Erfindung ein Computerprogrammprodukt, mit Hilfe dessen das erfindungsgemäße Verfahren auf einem Computer ausführbar ist. Weiterhin betrifft die Erfindung ein Messgerät mit einem Messsensor und der erfindungsgemäßen Vorrichtung.

Bei der erfindungsgemäßen Vorrichtung handelt es sich vorzugsweise um ein dimensionelles Messgerät. Bei derartigen dimensionellen Messgeräten erfolgt die Messplanung und Steuerung in der Regel softwarebasiert. Dimensionelle Messgeräte, für die eine solche softwarebasierte Planung und Steuerung des Messablaufs eingesetzt wird, sind beispielsweise Koordinatenmessgeräte oder Mikroskope. Rauhigkeitsmessgeräte oder andere Messgeräte zum Messen von Abständen und/oder Oberflächeneigenschaften eines Objekts werden ebenso als dimensionelle Messgeräte im vorliegenden Sinne verstanden. Ferner werden auch Computertomographen als Messgeräte im vorliegenden Sinne verstanden, mit denen bspw. aus einem Querschnitt eines Messobjektes ein Messbild generiert werden kann.

Koordinatenmessgeräte mit taktilen und/oder optischen Messsensoren werden in der dimensionellen Messtechnik verwendet, um die Form einer Werkstückoberfläche beispielsweise durch Abtastung zu bestimmen. Da die dimensionelle Messtechnik im Regelfall in Industriezweigen Anwendung findet, in denen sehr hohe Genauigkeiten, beispielsweise für nachfolgende Bearbeitungsschritte oder zur Qualitätssicherung erforderlich sind, ist eine fehlerfreie Messdurchführung sowie die fehlerfreie Aufnahme von Messpunkten von großer Wichtigkeit.

Mikroskope (z.B. Rasterelektronenmikroskope (REM) oder Rasterkraftmikroskope (RKM)) werden dazu verwendet, beispielsweise die Oberfläche eines Werkstücks (z.B. einer Platine) im Zuge der Qualitätskontrolle unter einer starken Vergrößerung anzusehen oder bildlich darzustellen. Die betrachteten Oberflächen weisen dabei oftmals Strukturen und/oder Einzelbauteile (z.B. Transistoren oder Widerstände) auf, deren Größenordnung unterhalb des Auflösungsvermögens eines menschlichen Auges, teilweise sogar auf atomarer Ebene, liegt. Mikroskopische Messgeräte werden bevorzugt in den Bereichen der Biotechnologie, Medizin, Elektrotechnik und/oder den Materialwissenschaften eingesetzt.

Um einen reproduzierbaren, fehlerfreien Messablauf mittels dieser Messgeräte zu gewährleisten, ist insbesondere bei der Durchführung von Serienmessungen, bei denen eine Vielzahl von Bauteilen gleicher Art in aufeinanderfolgenden Messungen dimensionell gemessen werden, eine möglichst detaillierte und genau Erfassung des jeweiligen Messobjektes notwendig. Werden die Koordinaten des Messobjekts bspw. optisch erfasst, wie dies insbesondere bei optischen Koordinatenmessgeräten und optisch arbeitenden Mikroskopen der Fall ist, werden in der Regel durch einen oder mehrere optische Sensoren (zumeist Kameras) Bilder von dem zu messenden Messobjekt in Form von Bilddaten erfasst, auf denen jeweils das Messobjekt bspw. vor einem Hintergrund zu erkennen ist. Zur Ermittlung der Koordinaten des Werkstücks werden diese Bilddaten dann bspw. durch Bildverarbeitungsverfahren ausgewertet.

Alternativ oder ergänzend kann es auch notwendig sein, Bilddaten von einem Messobjekt zu erfassen, um bspw. dessen Ist-Position und Lage auf einer Werkzeugaufnahme mit einer Soll-Position und Lage eines Referenz-Messobjektes abzugleichen. Ein solcher Abgleich kann notwendig sein, um eine Vergleichbarkeit zwischen mehreren Messobjekten gleicher Art und jeweils in Bezug auf das Referenz-Messobjekt zu gewährleisten.

Der Abgleich kann bspw. erfolgen, um an einem Referenz-Messobjekt festgelegte Messparameter auf das momentan zu messende Messobjekt zu transformieren (z.B. die Position von Messpunkten an dem Messobjekt anzugleichen). Hierbei werden insbesondere auch Beleuchtungsbedingungen (z.B. die Helligkeit) in dem erfassten Messbild und eine Homogenität des Bildes vorzugsweise auch abschnittsweise berücksichtigt. Zudem ist auch eine Signalfilterung und/oder eine Signalverstärkung der empfangenen Messbild-Signale möglich.

Um eine Bildaufnahmequalität bei der Erfassung der Bilddaten des Messobjekts zu verbessern, wird das bildhaft zu erfassende Messobjekt in der Regel zusätzlich beleuchtet.

Hierzu sind im Wesentlichen zwei verschiedene Beleuchtungsmethoden bekannt. Zum einen ist es möglich, die Lichtquelle unterhalb des Werkstücks (beispielsweise durch eine durchsichtige Auflageplatte durchscheinend) anzuordnen und das Messobjekt durch einen optischen Sensor von oben (d.h. gegenüberliegend von der Lichtquelle) bildlich zu erfassen. Diese Beleuchtungsmethode ist im Allgemeinen als Durchlicht-Beleuchtung bekannt. Zum anderen besteht die Möglichkeit, das zu erfassende Messobjekt mittels der sogenannten Auflichtbeleuchtung zu beleuchten, wobei in diesem Fall sowohl der optische Sensor als auch die Beleuchtungseinrichtung auf der gleichen Seite bezüglich des Messobjekts angeordnet sind.

Insbesondere bei der Auflichtbeleuchtung kann es jedoch immer wieder, bspw. aufgrund von unerwünschter Schattenbildung bzw. teilweiser Abschattung von einzelnen Bildbereichen, dazu kommen, dass einzelne Abschnitte von Objektkanten des zu messenden Messobjekts in den Bilddaten nicht eindeutig als Solche erkennbar sind oder in dem erfassten Bild als gegenüber der eigentlichen Ist-Position versetzt dargestellt oder verschwommen sind. Diese Problematik ist insbesondere bei der Auflichtbeleuchtung verstärkt wahrnehmbar, da bei dieser Beleuchtungsart die Lichtstrahlen von auf die Oberfläche des Messobjektes treffen, wobei es zu unerwünschten Reflexionen und/oder Schattenbildungen kommen kann. Bei der Durchlicht-Beleuchtung erscheint diese Problematik aufgrund der Beleuchtung des Messobjektes von unten als eher nachrangig, da durch diese Beleuchtungsmethode eine relativ klare (d.h. eindeutig identifizierbare) Kantenabbildung (durch einen Schwarz-Weiß-Kontrast) erreicht werden kann.

Um Fehler bei der sogenannten Segmentierung, d.h. das eindeutige Identifizieren des Messobjektes in den Bildern, und somit bei der späteren Weiterverarbeitung in Grenzen zu halten, ist zu Verminderung dieses Problems bislang ein hohes Maß an Expertenwissen (zumeist einhergehend mit einer langjährigen Berufserfahrung) notwendig. Hierdurch verursacht der Arbeitsschritt des Segmentierens des Messobjekts bzw. der Kantenfindung in den erfassten Bildern, insbesondere bei der Durchführung von Serienmessungen, einen hohen zeitlichen Aufwand und damit einhergehende hohe Kosten.

Zudem stellt sich insbesondere die Implementierung einer dynamischen Anpassung von sogenannten Kantenfindungsparametern, die im Zuge der Kantendetektion (englisch edge detection) als Teil der Segmentierung von Messobjekten in den Bildern durch einen Experten (bspw. ein Fachmann auf dem Gebiet Bildauswertung) festgelegt werden, insbesondere unter Berücksichtigung der Homogenität in dem zu messenden Bild(ausschnitt) bisweilen als schwierig. Bekannte Verfahren sind oft zu starr und erweisen sich in bestimmten Belichtungs-, Farb-, Kontrast- und/oder HomogenitätsSituationen als fehlerhaft. Insbesondere ist die Anzahl der vordefinierten Kantenfindungsparametersätze begrenzt und erscheint je nach Situation unvollständig, wodurch oftmals selbst mittels Expertenwissen keine optimalen Kantenfindungsparametereinstellung für bestimmte Sondersituationen bereitgestellt werden können. Dies führt wiederrum zu nicht optimalen Messergebnissen. Zudem ist in diesen Sondersituationen oftmals ein manuelles Nachjustieren nötig, um optimale Kantenfindungsparameter zur Erkennung der Objektkanten in dem Bild bereitzustellen.

Aufgrund des Vorgenannten ist es eine Aufgabe der vorliegenden Erfindung, ein Verfahren und eine Vorrichtung zur Kantenfindung von Objektkanten eines Messobjektes derart weiterzuentwickeln, dass die Kantenfindung auf vereinfachte und optimierte Weise erfolgen kann.

Diese Aufgabe wird gemäß einem Aspekt der Erfindung durch ein Verfahren zur Kantenfindung von Objektkanten eines Messobjektes auf Basis von Bilddaten gelöst, das die Schritte aufweist:
- Empfangen einer Vielzahl von Trainingsdaten von Bildern, die jeweils von einem Trainingsobjekt erfasst wurden, wobei das Trainingsobjekt eine Vielzahl von Objektkanten aufweist, die auf Basis von Trainings-Kantenfindungsparametern identifiziert sind;
- Empfangen von Messbilddaten eines Messbildes, das zur Auswertung des Messobjekts erfasst wird, wobei das Messobjekt eine Vielzahl von Objektkanten aufweist; und
- Ermitteln eines Kantenfindungsmodells zur Kantenfindung zumindest einer der Objektkanten des Messobjekts in dem Messbild auf Basis der Vielzahl von Trainingsdaten mittels maschinengestützten Lernens.

Gemäß einem weiteren Aspekt der vorliegenden Erfindung wird die oben genannte Aufgabe zudem durch eine Vorrichtung zur Kantenfindung von Objektkanten eines Messobjektes auf Basis von Bilddaten gelöst, wobei die Vorrichtung eine Auswerte- und Steuereinheit aufweist, die dazu eingerichtet ist,
- eine Vielzahl von Trainingsdaten von Bildern, die jeweils von einem Trainingsobjekt erfasst wurden, zu empfangen, wobei das Trainingsobjekt eine Vielzahl von Objektkanten aufweist, die auf Basis von Trainings-Kantenfindungsparametern identifiziert sind;
- Messbilddaten eines Messbildes zu empfangen, das zur Auswertung des Messobjekts erfasst wird, wobei das Messobjekt eine Vielzahl von Objektkanten aufweist; und
- ein Kantenfindungsmodell zur Kantenfindung zumindest einer der Objektkanten des Messobjekts in dem Messbild auf Basis der Vielzahl von Trainingsdaten mittels maschinengestützten Lernens zu ermitteln.

Gemäß einem weiteren Aspekt der vorliegenden Erfindung wird die vorliegende Aufgabe durch ein Computerprogrammprodukt gelöst, das einen Programmcode aufweist, der dazu eingerichtet ist, das oben genannte Verfahren auszuführen, wenn der Programmcode auf einem Computer ausgeführt wird.

Gemäß einem weiteren Aspekt der vorliegenden Erfindung wird die vorliegende Aufgabe durch ein Messgerät zum dimensionellen Messen des Messobjekts gelöst, wobei das Messgerät die erfindungsgemäße Vorrichtung und einen Messsensor zur Erfassung der Bilddaten aufweist.

Die vorliegende Erfindung basiert also mit anderen Worten auf dem Prinzip des (überwachten) maschinellen Lernens. Dabei wird z.B. ein neuronales Netz mit der Vielzahl von gekennzeichneten, sogenannten "gelabelten", Trainingsdaten trainiert, die vorzugsweise jeweils zur dimensionellen Messung eines Trainingsobjekts erfasst wurden. Ein Hauptvorteil ist, dass dadurch während dem laufenden Betrieb des Messgerätes kein Experte (in Form einer natürlichen Person) für die Einstellung von Kantenfindungsparametern mehr benötigt wird.

Zum maschinengestützten Lernen wird vorzugsweise eine möglichst große Anzahl von Trainings-Bildern, die jeweils von dem Trainingsobjekt erfasst wurden, von einer (natürlichen Person), vorzugsweise von einem Experten, gekennzeichnet. Ein solcher Experte kann in den Bildern beispielsweise die darin umfassten Objektkanten des Trainingsobjektes mit für das jeweilige Bild optimalen Kantenfindungsparametern versehen, um somit eine fehlerfreie Kantenfindung. Diese fehlerfreie Kantenfindung aufgrund der optimalen Kantenfindungsparameter führt wiederum dazu, dass das in dem Bild enthaltene Trainingsobjekt auf optimale Weise segmentiert werden kann.

Bei dem Anlegen der optimalen Kantenfindungsparameter bezieht der Experte sein Fachwissen sowie seine Berufserfahrung mit ein, so dass auch Bilder, in denen beispielsweise einzelne Kanten bzw. Kantenabschnitte abgeschattet und/oder unscharf dargestellt sind sowie Bilder, die zumindest in einzelnen Bildbereichen eine unzureichende Homogenität aufweisen, mit optimalen Kantenfindungsparametern versehen werden können.

Durch das Kennzeichnen der Trainingsdaten wird somit ein Datensatz bereitgestellt, der eine Vielzahl von Trainingsdaten von Bildern umfasst, die vorzugsweise das Trainingsobjekt in verschiedenen Beleuchtungssituationen und/oder in unterschiedlichen Positionierungen auf dem Werkstückträger des Messgerätes zeigt. Zudem ist es bevorzugt, wenn die Trainingsdaten Bilder unterschiedlicher Homogenität umfassen, so dass die künstliche Intelligenz die Einstellung von Kantenfindungsparametern auch für diese Spezialfälle erlernen kann.

Durch diesen Trainingsdatensatz ist es erfindungsgemäß möglich, mittels des maschinengestützten Lernens aufgrund der Vielzahl von Trainingsdaten (vorzugsweise mehrere hundert Einzelbilder aufweisend), eine Art und Weise der Einstellung von (optimalen) Kantenfindungsparametern situationsbedingt zu erlernen. Der hinter dem maschinengestützten Lernen stehende Algorithmus, beispielsweise ein neuronales Netz, lernt somit anhand der Trainingsdaten, was die passenden Kantenfindungsparameter zu jeder beliebigen Homogenitäts-, Farb-, Kontrast- und/oder Beleuchtungssituation an einer Objektkante in einem empfangenen Messbild sind.

Das Ergebnis dieses Trainings ist das ermittelte Kantenfindungsmodell, mit dessen Hilfe neue Bilddaten (d.h. beispielsweise die Messbilddaten des Messbildes) vorzugsweise automatisch, d.h. ohne Hinzuziehen eines Experten, bewertet werden können bzw. zumindest eine Objektkante des Messobjekts erkannt werden kann.

In den Trainingsdaten kann der Experte im einfachsten Fall lediglich (beispielsweise durch eine grafische Umrandung) hinterlegen, wo, d.h. an welchen Positionen, in einem Trainings-Bild Kanten bzw. Kantenabschnitte zu finden sind. Durch dieses Hinterlegen erfolgt in dem einfachsten Fall bereits eine Kennzeichnung der Trainingsdaten, mittels der maschinengestützt gelernt werden kann.

Alternativ kann der Experte die Bilder der Trainingsdaten auch derart auswerten bzw. kennzeichnen, dass die in den Bildern umfassten Objektkanten des Trainingsobjektes hochgenau, beispielsweise durch Festlegen von optimalen Kantenfindungsparametern, angezeigt werden. Je mehr Informationen über die Kantenfindung in den Trainingsdaten umfasst sind, desto einfacher und schneller kann das maschinengestützte Lernen die durch den Experten bereitgestellte Kantenfindungsparameter für die Findung von Objektkanten erlernen und somit hochgenaue Ergebnisse erzielen.

Es sei erwähnt, dass die erfindungsgemäße Vorrichtung bzw. das erfindungsgemäße Verfahren für jegliches bildgebendes Gerät, z.B. ein optisches Messgerät oder Mikroskop eingesetzt werden kann, ohne auf ein bestimmtes Messgerät beschränkt zu sein.

Ferner sei erwähnt, dass das erfindungsgemäße Verfahren des maschinellen Lernens der automatischen Kantenfindung bzw. der Bereitstellung eines Kantenfindungsmodells verschiedene Varianten annehmen kann, so dass es prinzipiell auf beliebigen bildgebenden Geräten verwendet werden kann und somit nicht ausschließlich auf optische Messgeräte und/oder Mikroskope beschränkt ist.

Zur optimalen Ermittlung eines Kantenfindungsmodells zu dem jeweiligen Messbild bzw. dem in dem jeweiligen Messbild abgebildeten Messobjekt ist eine möglichst umfangreiche Datensammlung von gekennzeichneten Trainingsdaten von Vorteil, die sämtliche gängigen und besonderen (Beleuchtungs- und/oder Homogenitäts-, Farb-, Kontrast-) Szenarien von Messbildern abdeckt. Beispielsweise kann ein Datensatz von bereits manuell segmentierten Messbildern, in denen durch einen Experten bereits in der Vergangenheit optimale Kantenfindungsparameter-Einstellungen für erfasste Messbilder angelegt worden sind, als Datengrundlage für die Trainingsdaten dienen.

Unter dem Kantenfindungsmodell wird vorzugsweise ein Algorithmus verstanden, mittels dem die Kantenfindung von Objektkanten des Messobjektes in dem Messbild ermöglicht wird. Dieser Algorithmus kann vorzugsweise aus einer Reihe bekannter Algorithmen vollautomatisch durch die künstliche Intelligenz ausgewählt sein oder aber auf Basis des maschinengestützten Lernens eigens aufgrund der Trainingsdaten für das jeweils empfangene Messbild ermittelt werden. Ferner ist es möglich, dass für ein Messbild beispielsweise bereichsweise mehrere Kantenfindungsmodelle ermittelt werden.

Somit kann durch den Einsatz von maschinellem Lernen quasi jedes Szenario abgedeckt werden und die Einstellung von Kantenfindungsparametern in Messbildern stets auf optimale Art und Weise sichergestellt werden. Dabei bemisst sich die Güte des maschinengestützten Lernens an der Güte und Anzahl der eingegebenen Trainingsdaten. So steigt die Güte des maschinellen Lernens bspw. mit der Anzahl der eingegebenen Trainingsdatenmenge bei gleichbleibender Güte der Trainingsdaten. Zudem kann beispielsweise davon ausgegangen werden, dass ein Trainingsdatensatz aus mehreren tausend Bildern, die allesamt durch einen Experten bewertet worden sind, ein maschinelles Lernen höherer Güte als ein Trainingsdatensatz mit nur einigen hundert Trainingsdaten ermöglicht.

Der Messsensor des Messgeräts ist vorzugsweise ein optischer Messsensor bzw. eine Kamera. Der Messsensor kann bspw. auch eine Übersichtskamera (vorzugsweise mit einem Weitwinkel-Objektiv) sein, durch welche der gesamte Messraum in nur einem Bild erfasst werden kann. Der Messsensor kann entweder nur zum Erfassen der Messbilder bzw. Trainingsbilder eingesetzt werden. Alternativ kann der Messsensor ergänzend zur dimensionellen Messung des Messobjekts eingesetzt werden, wobei in einem solchen Fall das Messgerät ein optisches Messgerät ist. Ferner kann das Messgerät den Messsensor zur Erfassung der Bilddaten und zusätzlich einen weiteren optischen und/oder taktilen Sensor zur Erfassung der Koordinaten des Messobjekts aufweisen, wobei es sich in einem solchen Fall um ein Multi-Sensor-Messgerät handelt.

Unter dem Begriff "Mess-Bilddaten" sind vorliegend jegliche Arten von Bilddaten zu verstehen, die nicht notwendigerweise zur Messung des Messobjektes erfasst werden. Im Wesentlichen genügen auch Bilddaten, die das Messobjekt (ggf. teilweise) umfassen. So werden in der Mikroskopie bspw. Bilder in manchen Fällen nur zur Auswertung und nicht zur Messung herangezogen. Vorliegend dient der Begriff "Mess-Bilddaten" daher im Wesentlichen zur Abgrenzung gegenüber dem Begriff "Trainings-Bilddaten". Für den Begriff "Trainings-Bilddaten" gilt dies in entsprechender Weise.

Das Messobjekt kann alternativ auch ein sog. Paletten-System sein, bei welchem mehrere auszuwertende Objekte auf einer Palette aufgespannt sind. In einem solchen Fall erfolgt eine vorzugsweise mittels des Segmentierungsmodells zu erfolgende Ausrichtung für die gesamte Palette.

In einer Ausgestaltung wurde die Vielzahl von Trainings-Bilddaten jeweils zur dimensionellen Messung des Trainingsobjektes erfasst, und die Mess-Bilddaten des Messbildes werden zur dimensionellen Messung des Messobjekts erfasst.

Das erfindungsgemäße Segmentierungsmodell wird also vorzugsweise für Messbilder ermittelt, die zur dimensionellen Erfassung eines Werkstücks (bzw. des Messobjekts) erfasst werden.

In einer Ausgestaltung weist das erfindungsgemäße Verfahren ferner den Schritt auf: Ermitteln von Kantenfindungsparameter-Einstellungen zur Erkennung der zumindest einen Objektkante des Messobjekts in dem Messbild aufgrund des ermittelten Kantenfindungsmodells.

Dieser Schritt steht sozusagen für die Ausgabe des Kantenfindungsmodells gemäß dem erfindungsgemäßen Verfahren. Hierdurch wird die Einstellung der Kantenfindungsparameter, die der Algorithmus bzw. das Kantenfindungsmodell als optimale Kantenfindungsparameter-Einstellungen für das erfasste Messbild errechnet hat, ermöglicht. Durch das Kantenfindungsmodell wird also eine für das Messbild angepasste Kantenfindungsparameter-Einstellung ausgegeben, auf Grundlage derer eine optimale Erkennung der Objektkanten des Messobjektes in dem Messbild erfolgen kann.

Diese Ausgestaltung ist von Vorteil, da gegenüber dem Stand der Technik keine manuelle Nachjustierung von Einstellungen zur Kantenfindung notwendig ist. Insbesondere können auch komplexe Beleuchtungs- und/oder Homogenitätssituationen in einem Messbild mittels der künstlichen Intelligenz bzw. dem maschinengestützten Lernen auf Basis der Trainingsdaten erkannt und auf optimale Art und Weise gelöst werden.

In einer weiteren Ausgestaltung wird das Kantenfindungsmodell ferner auf Basis von Homogenitäts-, Farb-, Kontrast- und/oder Helligkeitseigenschaften des Messbildes ermittelt.

Vorzugsweise wird das Kantenfindungsmodell auf Basis sämtlicher zur Verfügung stehender Informationen, die zur optimalen Erkennung von Objektkanten aus den Trainingsdaten zu entnehmen sind, ermittelt. Beispielhaft werden somit auch Informationen über die Homogenität, Helligkeitsverteilung, den Schattenwurf und/oder sonstige Helligkeitseigenschaften der Trainingsbilder aus den Trainingsdaten extrahiert und von der künstlichen Intelligenz zum Lernen verwendet und somit für die Ermittlung des Kantenfindungsmodells eingesetzt. Dadurch kann beispielsweise ein Abgleich der Homogenitäts-, Farb-, Kontrast- und/oder Helligkeitseigenschaften des Messbildes mit einem oder mehreren der Trainingsdaten erfolgen, auf Grundlage dessen ein Kantenfindungsmodell ermittelt wird.

In einer weiteren Ausgestaltung weisen die empfangenen Messbilddaten des Messbildes mehrere Bildausschnitte auf, für die jeweils ein separates Kantenfindungsmodell auf Basis der Homogenitäts-, Farb-, Kontrast- und/oder Helligkeitseigenschaften des jeweiligen Bildausschnitts ermittelt wird.

Das Kantenfindungsmodell muss also nicht notwendigerweise gesamthaft für das Messbild ermittelt werden. Alternativ kann das Kantenfindungsmodell abschnittsweise jeweils für mehrere Bildbereiche des Messbildes separat ermittelt werden. Für jeden Bildbereich kann somit ein individuelles Kantenfindungsmodell ermittelt werden. So kann es beispielsweise sein, dass ein Messbild vier Bereiche unterschiedlicher Homogenität und/oder Helligkeitseigenschaft aufweist, für die jeweils ein separates Kantenfindungsmodell gemäß dem erfindungsgemäßen Verfahren ermittelt wird.

Diese Ausgestaltung hat den Vorteil, dass eine optimale Kantenfindung bzw. eine optimale Kantenfindungsparameter-Einstellung für das jeweilige Messbild auch segmentweise bzw. abschnittsweise erfolgen kann.

In einer weiteren Ausgestaltung weist das maschinengestützte Lernen einen Algorithmus auf Basis eines neuronalen Netzes auf.

Das Ermitteln des Kantenfindungsmodells zur Kantenfindung von Objektkanten des Messobjektes auf Basis von Bilddaten mittels maschinengestützten Lernens erfolgt also vorzugsweise unter Verwendung einer künstlichen Intelligenz in Form eines neuronalen Netzwerks.

Das maschinengestützte Lernen kann grundsätzlich durch ein sogenanntes teilüberwachtes Lernen (Englisch: semi-supervised learning), bestärkendes Lernen (Englisch: reinforcement learning), aktives Lernen (Englisch: active learning) und/oder selbständiges Lernen (Englisch: self-training) erfolgen. Grundsätzlich bedeutet das, dass der hinter dem maschinengestützten Lernen stehende Algorithmus irgendeine Art von künstlicher Intelligenz aufweist, d.h. die Methode des maschinellen Lernens verschiedene Varianten annehmen kann. Das neuronale Netz kann mittels des maschinengestützten Lernens vollständig aufgebaut werden oder alternativ mit Hilfe eines Basismodells (z.B. VGG16) unter Verwendung eines (anwendungsspezifischen) Top-Layers gebildet werden (sog. transfer learning).

In einer weiteren Ausgestaltung wird die Vielzahl von Trainingsdaten von Bildern vor dem Empfangen durch eine (natürliche) Person gekennzeichnet, so dass die Person zu jedem Bild die Trainings-Kantenfindungsparameter ermittelt, durch die die Vielzahl von Objektkanten des Trainingsobjekts identifiziert wird.

Der Trainingsdatensatz wird also vorzugsweise durch einen Experten mittels Expertenwissen erzeugt, indem der Experte die Vielzahl von Trainingsdaten manuell auswertet und die in den Bildern gezeigten Objektkanten des Trainingsobjektes vorzugsweise auch abschnittsweise mit optimalen, sich grundsätzlich auch unterscheidenden Kantenfindungsparameter-Einstellungen kennzeichnet, so dass eine möglichst große Anzahl an Kanteninformationen für das spätere maschinengestützte Lernen bereitgestellt werden. Beispielsweise kann der Experte ein Bild mental in einen oder mehrere Bildbereiche unterteilen und die in jedem Bildbereich umfassten Objektkanten mit unterschiedlichen Kantenfindungsparameter-Einstellungen kennzeichnen, um somit ein optimales Kantenfindungs-Ergebnis zu erzielen.

In einer weiteren Ausgestaltung wird die Ermittlung des Kantenfindungsmodells unter Anwendung eines Sobel-Operators, eines Scharr-Operators, eines Laplace-Filters, eines Prewitt-Operators, eines Roberts-Operators, eines Kirsch-Operators, eines Canny-Algorithmus, eines Marr-Hildreth-Operators, eines Kontrastverstärkers, einer aktiven Kontur und/oder eines Extremalspannenfilters durchgeführt.

In dieser Ausgestaltung werden beispielhafte Kantenfindungsmethoden bzw. -verfahren aufgezählt, durch die flächige Bereiche in einem digitalen Bild voneinander zu unterscheiden sind, wenn sie sich entlang gerader und/oder gekrümmter Linien ausreichend in ihren Farb- und/oder Grauwerten, einer Helligkeit und/oder Textur unterscheiden. Dabei sorgen spezielle Kantenoperatoren dafür, dass Übergänge zwischen diesen Bereichen (beispielsweise ein Grauwertgradient) erkannt und als Kanten markiert werden können. Zugleich soll durch diese Verfahren und Methoden zur Kantenfindung auch sichergestellt sein, dass ein einzelner homogener Bereich, der als solcher erkannt werden kann, nicht durch eine vermeintliche Kante in zwei Teilflächen unterteilt wird.

Es sei erwähnt, dass die Kantenfindung grundsätzlich auch über weitere, hier nicht explizit genannte Kantenfindungsverfahren erfolgen kann.

Das erfindungsgemäß ermittelte Kantenfindungsmodell kann vorzugsweise eine Mischung der bekannten Kantenfindungsverfahren ausweisen oder aber auf Basis des maschinengestützten Lernens einzig und allein für das Messbild in Form eines spezifischen Algorithmus ermittelt bzw. berechnet werden.

Es versteht sich, dass die vorstehend genannten und die nachstehend noch zu erläuternden Merkmale und die in den abhängigen Ansprüchen definierten Merkmale nicht nur in der jeweils angegebenen Kombination, sondern auch in anderen Kombinationen oder in Alleinstellung verwendbar sind, ohne den Rahmen der vorliegenden Erfindung zu verlassen.

Zudem versteht es sich, dass sich die vorstehend genannten und die nachstehend noch zu erläuternden Merkmale nicht nur auf das erfindungsgemäße Verfahren, sondern in äquivalenter Weise auch auf die erfindungsgemäße Vorrichtung sowie auf das erfindungsgemäße Computerprogrammprodukt beziehen, ohne jeweils in gesonderter Form genannt zu werden.

Ausführungsbeispiele der Erfindung sind in den Zeichnungen dargestellt und werden in der nachfolgenden Beschreibung näher erläutert. Es zeigen:
Fig. 1 ein Messgerät mit einem Ausführungsbeispiel der erfindungsgemäßen Vorrichtung;
Fig. 2 ein Ablaufdiagramm eines Ausführungsbeispiels des erfindungsgemäßen Verfahrens;
Fig. 3 eine schematische Darstellung zur Erläuterung von Prinzipien des maschinengestützten Lernens; und
Fig. 4 eine schematische Darstellung zur Erläuterung von Prinzipien des erfindungsgemäßen Verfahrens.

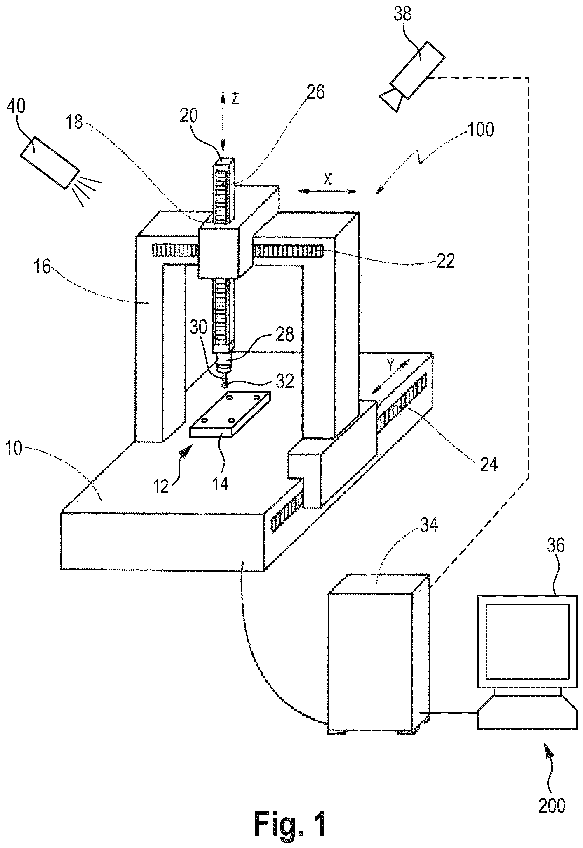

Fig. 1 zeigt ein beispielhaftes Messgerät mit einem Ausführungsbeispiel der erfindungsgemäßen Vorrichtung, auf der das erfindungsgemäße Verfahren ausführbar ist. Das Messgerät ist in seiner Gesamtheit mit der Bezugsziffer 100 gekennzeichnet. Die Vorrichtung ist in ihrer Gesamtheit mit der Bezugsziffer 200 gekennzeichnet.

Bei dem Messgerät 100 handelt es sich im vorliegenden Beispiel um ein Koordinatenmessgerät in sogenannter Portalbauweise. In anderen Ausführungsbeispielen kann es sich bei dem Messgerät 100 auch um ein Mikroskop, beispielsweise um ein Rasterelektronenmikroskop oder ein Rasterkraftmikroskop handeln. Ebenso kann es sich bei dem Messgerät 100 um andere Arten von Koordinatenmessgeräten oder grundsätzlich andere Arten von Messgeräten zur dimensionellen Messung handeln.

Das in Fig. 1 gezeigte Koordinatenmessgerät 100 weist eine Basis 10 auf. Bei der Basis 10 handelt es sich vorzugsweise um eine stabile Platte, die beispielsweise aus Granit gefertigt ist. Auf der Basis 10 ist eine Werkstückaufnahme 12 angeordnet, die dazu ausgebildet ist, ein Messobjekt 14 zu halten. Beispielhaft ist als Messobjekt 14 eine Platte mit vier eckseitigen Bohrungen gezeigt. Die Werkstückaufnahme 12 kann zu Beleuchtungszwecken, d.h. zur Beleuchtung des Messobjektes 14, vorzugsweise durchsichtig, bspw. aus einem (semi-) transparenten Material, gefertigt sein.

Auf der Basis 10 ist ein Portal 16 in Längsrichtung verschiebbar angeordnet. Das Portal 16 dient als bewegliche Trägerstruktur. Das Portal 16 weist zwei von der Basis 10 nach oben abragende Säulen auf, die durch einen Querträger miteinander verbunden sind und gesamthaft eine umgekehrte U-Form aufweisen.

Die Bewegungsrichtung des Portals 16 relativ zu der Basis 10 wird üblicherweise als Y-Richtung bezeichnet. An dem oberen Querträger des Portals 16 ist ein Schlitten 18 angeordnet, der in Querrichtung verfahrbar ist. Die Querrichtung wird üblicherweise als X-Richtung bezeichnet. Der Schlitten 18 trägt eine Pinole 20, die in Z-Richtung, also senkrecht zu der Basis 10, verfahrbar ist.

Die Bezugsziffern 22, 24, 26 bezeichnen Messeinrichtungen, anhand derer die X-, Y- und Z-Position des Portals 16, des Schlittens 18 und der Pinole 20 bestimmt werden können. Beispielsweise handelt es sich bei der Messeinrichtung 22, 24, 26 um Glasmessstäbe, welche als Messskalen dienen. Diese Messskalen sind in Verbindung mit entsprechenden Leseköpfen (hier nicht dargestellt) dazu ausgebildet, die jeweils aktuelle Position des Portals 16 relativ zu der Basis 10, die Position des Schlittens 18 relativ zu dem oberen Querbalken des Portals 16 und die Position der Pinole 20 relativ zu dem Schlitten 18 zu bestimmen.

An einem unteren, freien Ende der Pinole 20 ist ein Messkopf 28 angeordnet. Der Messkopf 28 ist dazu eingerichtet, Messpunkte an dem Messobjekt 14 zu erfassen. Der Messkopf 28 ist Teil eines Messsensors, dessen Messsensorik von dem Messkopf 28 separat angeordnet oder in diesem integriert oder über ein oder mehrere Kabel oder kabellos mit diesem verbunden sein kann. Der Messkopf 28 weist einen in Z-Richtung in Richtung der Basis abragenden, taktilen Taststift 30 auf. Der Taststift 30 ist dazu eingerichtet, mittels eines Tastkopfs 32 eine Oberfläche des Messobjekts 14 abzutasten.

Bei der Abtastung der Oberfläche des Messobjekts 14 erzeugt der Tastkopf 32 in dem Messkopf 28 ein elektrisches Messsignal, auf Basis dessen die dimensionellen Eigenschaften des zu vermessenden Messobjekts 14 ermittelt werden können. Zum Anfahren der Messpunkte an dem Messobjekt 14 wird der Messkopf 28 relativ zu der Werkstückaufnahme 12 bzw. zu dem Messobjekt 14 verfahren. Hierzu werden die Bewegungen des Portals 16 relativ zu der Basis 10, des Schlittens 18 relativ zu dem Portal 16 und der Pinole 20 relativ zu dem Schlitten 18 von einer Auswerte- und Steuereinheit 34 durch eine Vielzahl von vordefinierten Steuerbefehlen beispielsweise über eine CNC-Ansteuerung gesteuert.

Die Auswerte- und Steuereinheit 34 ist in Fig. 1 beabstandet von dem Koordinatenmessgerät 100 als separate Einheit angeordnet und mit der Basis 10 des Koordinatenmessgeräts 100 über mehrere Kabel verbunden. Die Auswerte- und Steuereinheit 34 ist ferner auch als Teil der Vorrichtung 200 anzusehen. Die Vorrichtung 200 dient nicht nur der Steuerung des Koordinatenmessgeräts 100, sondern auch zur Kantenfindung von Objektkanten in Bilddaten, die zur Messobjekterkennung auf Basis dieser Bilddaten ermittelt werden.

Die in der Vorrichtung 200 umfasste Auswerte- und Steuereinheit 34 weist vorliegend einen Bildschirm 36 auf. Die Auswerte- und Steuereinheit 34 weist vorzugsweise zudem einen Prozessor und eine Speichereinrichtung (z.B. eine Festplatte) auf. In dieser Speichereinrichtung ist ein Programmcode einer Softwareapplikation gespeichert, die mithilfe des Prozessors der Auswerte- und Steuereinheit 34 ausführbar ist. Über visuelle Darstellungen an dem Bildschirm 36 kann ein Benutzer vorzugsweise einen für eine spätere Messung von Messobjekten 14 benötigten Messplan mittels einer Softwareapplikation erstellen und sich Bilddaten graphisch anzeigen lassen, diese bearbeiten und auswerten.

Ferner weist die Vorrichtung 200 erfindungsgemäß einen Messsensor 38 auf, mit dem beispielsweise Messbilddaten von Messbildern zur dimensionellen Messung des Messobjekts erfasst werden. Der Messsensor 38 ist vorzugsweise ein optischer Messsensor, bspw. eine Kamera.

Der Messsensor 38 kann alternativ auch an der Pinole 20 angeordnet sein und in diesem Fall ergänzend zu der erfindungsgemäßen Bilderfassung des Messobjekts 14 auch zur eigentlichen Messung bzw. Erfassung der Koordinaten des Messobjekts 14 eingesetzt werden. In diesem Fall handelt es sich bei dem Koordinatenmessgerät 100 um optisches Koordinatenmessgerät.

Alternativ kann an der Pinole 20 zusätzlich zu dem taktilen Tastkopf 28 der Messsensor 38 angeordnet sein, dabei allerdings nur zur Erfassung der Bilddaten und nicht zur Messung der Koordinaten des Messobjekts 14 dienen. Die Messung der Koordinaten des Messobjekts 14 erfolgt dann über den taktilen Tastkopf. In diesem Fall handelt es sich um ein sogenanntes Multi-Sensor-Koordinatenmessgerät.

Bevor eine Koordinatenmessung sowie eine Messobjekterkennung beginnt, wird der Messablauf typischerweise in einem Messplan festgelegt. Hierbei wird insbesondere festgelegt, welche geometrischen Elemente (Messelemente) des Messobjekts 14 gemessen werden sollen und welche dimensionellen Messgrößen (Prüfmerkmale) dieser Messelemente durch das Koordinatenmessgerät 100 quantitativ an dem Messobjekt 14 erfasst werden sollen. Ferner werden in dem Messplan diverse Parameter zur Messstrategie, Messgeschwindigkeit sowie zur Steuerung des Koordinatenmessgerätes 100 und insbesondere des Messkopfes 28 festgelegt. Zur Sicherstellung einer späteren Verwendung des Prüfplans in (Serien-) Messungen erfolgt die Festlegung solcher Messparameter anhand eines Referenzmessobjekts, das bspw. als reines CAD-Modell oder als sogenanntes goldenes Bauteil vorliegen kann.

Nachdem ein Prüfplan anhand des Referenz-Messobjekts definiert wurde, kann die dimensionelle Messung des Messobjekts 14 erfolgen. Im Falle von Serienmessungen wird eine Vielzahl von Messobjekten 14 gleicher Art gemessen. Jedes Messobjekt 14, das auf der Werkstückaufnahme 12 bspw. manuell (durch einen Bediener) oder (teil-) automatisch aufgespannt wird, wird zum Abgleich mit dem Referenz-Messobjekt sowie zum Anpassen der Messparameter (z.B. der Position der im Prüfplan definierten Messpunkte) durch den optischen Messsensor 38 in Form von Bilddaten erfasst.

Erfolgt die dimensionelle Erfassung des Messobjektes 14 rein optisch, bspw. über Triangulation mittels zweier Kameras, werden Bilddaten von dem Messobjekt 14 nicht nur zur Angleichung von Messparametern aus dem Prüfplan erfasst, sondern unmittelbar für die dimensionelle Erfassung des Messobjekts 14.

Unabhängig davon ist es stets notwendig, das in den Bildern der Kamera(s) 38 erfasste Messobjekt 14 eindeutig zu erkennen bzw. zu segmentieren, wofür wiederum ein möglichst optimale Kantenfindung von Objektkanten des Messobjekts 14 notwendig ist.

Zur Qualitätssicherung und Verbesserung der bildhaften Darstellung des Messobjektes 14 weist die Vorrichtung 200 vorzugsweise eine Beleuchtungseinrichtung 40 auf. Die Beleuchtungseinrichtung 40 ist dazu eingerichtet, das Messobjekt 14 entweder von oben in Form einer Auflichtbeleuchtung oder von unten in Form einer Durchlichtbeleuchtung zu beleuchten. Insbesondere bei der Beleuchtung von oben, der sogenannten Auflicht-Beleuchtung, kommt es in den erfassten Bilddaten immer wieder zu Abschattungen des Messobjekts 14 und/oder zur Inhomogenität in dem erfassten Messbild, durch die eine optimale Kantenfindung erschwert wird. Durch das erfindungsgemäße Verfahren wird dieses Problem umgangen.

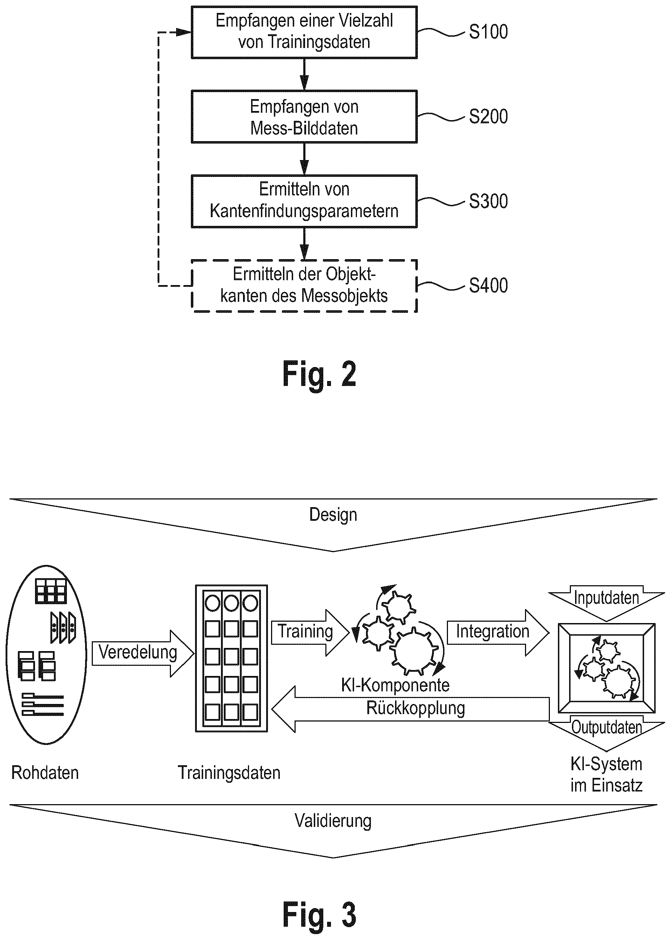

Zur besseren Nachvollziehbarkeit des erfindungsgemäßen Verfahrens, das mittels der Vorrichtung 200 ausgeführt werden kann, wird im Folgenden auf die Figuren 2 bis 4 Bezug genommen.

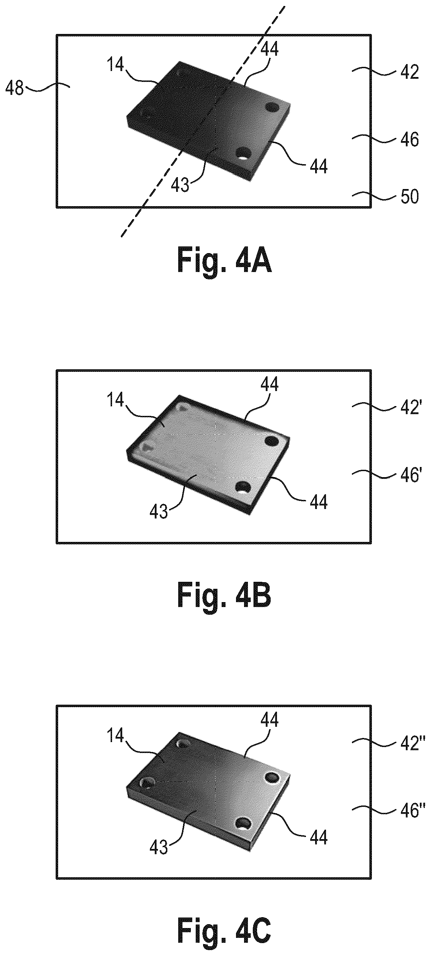

In Fig. 2 ist ein Ausführungsbeispiel des erfindungsgemäßen Verfahrens als Ablaufdiagramm gezeigt. In Fig. 3 ist zum besseren Verständnis des maschinellen Lernens ein Blockdiagramm dargestellt. Zudem sind zum besseren Verständnis in Fig. 4 beispielhafte Messbilder dargestellt, mittels derer die Kantenfindung bzw. die Einstellung von geeigneten Kantenfindungsparametern erläutert wird. Die bezüglich Fig. 2 eingeführten Bezugszeichen sind Fig. 3 zu entnehmen.

In Schritt S100 erfolgt ein Empfangen einer Vielzahl von Trainingsdaten von Bildern 42, 42', 42", die jeweils zur dimensionellen Messung eines Trainingsobjekts 43, bspw. einem dem Messobjekt 14 ähnlichen Bauteil, erfasst wurden, wobei das Trainingsobjekt 43 eine Vielzahl von Objektkanten 42 aufweist, die auf Basis von Trainings-Kantenfindungsparametern identifiziert sind. Beispielsweise legt ein Experte für die Vielzahl von Objektkanten 44 in den Trainingsbildern 42, 42', 42" (siehe Fig. 4A) jeweils unterschiedliche Kantenfindungsparameter-Einstellungen fest, um so unterschiedlichen Beleuchtungs- und/oder Homogenitätssituationen im erfassten Trainingsbild 42, 42', 42" gerecht zu werden (beachte zur nähren Erläuterung die nachstehenden Ausführungen zu den Figuren 4A-4C). In den Fig. 4A bis 4C sind beispielhaft lediglich zwei der Vielzahl von Objektkanten 44 eingezeichnet.

In Schritt S200 erfolgt ein Empfangen von Messbilddaten eines Messbildes 46, 46', 46", das zur dimensionellen Messung des Messobjekts 14 erfasst wird, wobei das Messobjekt 14 eine Vielzahl von Objektkanten 44 aufweist.

In einem Schritt S300 erfolgt ein Ermitteln eines Kantenfindungsmodells zur Kantenfindung der Objektkanten 44 des Messobjekts 14 in dem Messbild 46, 46', 46" auf Basis der Vielzahl von Trainingsdaten mittels maschinengestützten Lernens. Der Algorithmus, durch den das maschinengestützte Lernen ermöglicht wird, wird vorzugsweise auf dem in der Auswerte- und Steuereinheit 34 umfassten Prozessor ausgeführt.

In einem optionalen Schritt S400 (gekennzeichnet durch gestrichelte Linierung) erfolgt zudem ein Ermitteln von Kantenfindungsparameter-Einstellungen zur Erkennung der Objektkanten 44 des Messobjekts 14 in dem Messbild 46, 46', 46" aufgrund des ermittelten Kantenfindungsmodells.

Es sei erwähnt, dass das Messbild 46, 46', 46" nach der Durchführung des optionalen Schrittes S400 vorzugsweise wieder als Eingabedatei für den Schritte S100 dienen kann. In diesem Falle wird das Verfahren gemäß dem Ausführungsbeispiel in Fig. 2 fortlaufend (in Form einer Dauerschleife) ausgeführt, so dass empfangene Messbilder 46, 46', 46" nach der Auswertung durch die künstliche Intelligenz in Form von Trainings-Bilddaten nutzbar gemacht werden, d.h. ein stetiges Weiterlernen durch das maschinengestützte Lernen selbstinitiiert erfolgen kann.

In Fig. 3 ist ein Blockdiagramm gezeigt, anhand dessen das maschinengestützte Lernen vereinfacht erläutert werden kann. Der lernende Algorithmus (z.B. ein neuronales Netz) erhält als Eingangsdaten (sog. Rohdaten), die durch einen Experten veredelt bzw. gelabelt werden und so als Trainingsdatensatz dienen. Die Trainingsdaten dienen als Input für die KI-Komponente und werden in ein KI-System integriert, wenn dieses im Einsatz Input-Daten mittels künstlicher Intelligenz verarbeitet, um Output-Daten zu erzeugen. Zudem besteht eine Rückkopplung zwischen den Ausgangsdaten des KI-Systems und den Trainingsdaten, da die Ausgangsdaten der künstlichen Intelligenz wiederum als Trainingsdaten dienen können. Mit anderen Worten dient der Ausgang des lernenden Algorithmus vorzugsweise zusammen mit Echtzeit-(Online-) ungelabelten Daten, bspw. resultierend aus gerade durchgeführten Segmentierungen von Messobjekten, als Eingang zur Ermittlung des (jeweiligen) Segmentierungsmodells. Bei Anwendung des Segmentierungsmodells werden vorzugsweise erneut gelabelte Daten erzeugt, die in der nächsten Lern-Stufe der künstlichen Intelligenz bzw. des neuronalen Netzes als gelabelte (Trainings-) Daten fungieren.

In den Figuren 4A bis 4C sind drei beispielhafte Trainings-Bilder 42, 42', 42" dargestellt, die in dieser Form jedoch grundsätzlich auch Messbilder 46, 46', 46" sein können. Aus diesem Grund wurden in den Figuren 4A bis 4C jeweils die Bezugszeichen für die Trainingsbilder und die Messbilder eingezeichnet.

In Fig. 4A ist ein Trainingsbild 42 gezeigt, in welchem das Messobjekt 14 bzw. das Trainingsobjekt 43 zu erkennen ist. Das Trainingsbild 42 wurde vorliegend bspw. ungünstig durch die Beleuchtungseinrichtung 40 beleuchtet und weist daher einen unzureichend beleuchteten ersten Bildbereich 48 sowie einen hinreichend beleuchteten zweiten Bildbereich 50 auf. Beide Bildbereiche 48, 50 des Trainingsbildes 42 sind vereinfacht durch eine quer verlaufende, gestrichelte Linie unterteilt.

Der Experte kann nun für den ersten Bildbereich 48 vorzugsweise erste Kantenfindungsparameter-Einstellungen festlegen, durch die die Kantenfindung der Bauteilkanten (Objektkanten 44), insbesondere der Bohrlochkanten, ermöglicht wird. Hierfür kann der Experte bspw. einen Kontrastwert-Filter für den ersten Bereich 48 besonders sensitiv einstellen.

Für den zweiten Bereich 50 legt der Experte hingegen bspw. zweite Kantenfindungsparameter-Einstellungen fest, die sich gegenüber den ersten Kantenfindungsparameter-Einstellungen unterscheiden, da der zweite Bildbereich 50 gegenüber dem ersten Bildbereich 48 deutlich besser ausgeleuchtet ist, und ein stärkerer Kontrast (eine stärkere Grauwert-Abstufung) vorliegt.

Nach dem Trainieren des maschinengestützten Lernens können Messbilder, bspw. das Messbild 46, mittels künstlicher Intelligenz ausgewertet werden. Hierbei ist es bspw. möglich, dass die künstliche Intelligenz auf Grundlage von Trainingsbildern, die dem Trainingsbild 42 ähnlich sind, erlernt hat, Messbilder, in denen eine ähnliche Beleuchtungssituation vorliegt, ebenfalls in zwei oder mehr Bildbereiche 48, 50 zu unterteilen. Die künstliche Intelligenz ermittelt für jeden der Bildbereiche 48, 50 ein jeweiliges Kantenfindungsmodell, durch welches Kantenfindungsparameter-Einstellungen für den jeweiligen Bildbereich 48, 50 vorzugsweise separat festgelegt werden können. Die durch das maschinelle Lernen ermittelten Kantenfindungsparameter-Einstellungen für die Bildbereiche 48, 50 ähneln vorzugsweise den Kantenfindungsparameter-Einstellungen, die von dem Experten für diese Art der Beleuchtungssituation festgelegt worden sind.

Fig. 4B zeigt ein beispielhaftes Trainingsbild 42' bzw. Messbild 46', welches bspw. eine geringe Bildhomogenität aufweist, durch welche die Objektkanten nicht scharf, d.h. ohne klaren (d.h. eindeutig identifizierbaren) Grauwert-Kontrast, dargestellt sind. Das maschinelle Lernen ermittelt für diese Art von Bildhomogenität dann vorzugsweise eine Kantenfindungsparameter-Einstellung für das Messbild 46', die einer Kantenfindungsparameter-Einstellung ähnlich ist, die ein Experte für eine Trainingsbild 42' mit ähnlicher Bildhomogenität festgelegt hat.

Fig. 4C zeigt ein beispielhaftes Trainingsbild 42" bzw. Messbild 46", welches bspw. gegenüber Fig. 4B eine deutlich bessere Bildhomogenität aufweist, durch welche die Objektkanten scharf, d.h. durch einen klaren (d.h. eindeutig identifizierbaren) Grauwert-Kontrast, gekennzeichnet sind. Das maschinelle Lernen ermittelt für diese Art von Bildhomogenität dann vorzugsweise eine Kantenfindungsparameter-Einstellung für das Messbild 46", die einer Kantenfindungsparameter-Einstellung ähnlich ist, die ein Experte für eine Trainingsbild 42" mit ähnlich hoher Bildhomogenität festgelegt hat.

## Patentansprüche

1. Verfahren zur Kantenfindung von Objektkanten (44) eines Messobjektes (14) auf Basis von Bilddaten, das die Schritte aufweist:
- Empfangen (S100) einer Vielzahl von Trainingsdaten von Bildern (42), die jeweils von einem Trainingsobjekt (43) erfasst wurden, wobei das Trainingsobjekt (43) eine Vielzahl von Objektkanten (44) aufweist, die auf Basis von Trainings-Kantenfindungsparametern identifiziert sind;
- Empfangen (S200) von Messbilddaten eines Messbildes (46), das zur Auswertung des Messobjekts (14) erfasst wird, wobei das Messobjekt (14) eine Vielzahl von Objektkanten (44) aufweist; und
- Ermitteln (S300) eines Kantenfindungsmodells zur Kantenfindung zumindest einer der Objektkanten (44) des Messobjekts (14) in dem Messbild (46) auf Basis der Vielzahl von Trainingsdaten mittels maschinengestützten Lernens.

2. Verfahren nach Anspruch 1, wobei die Vielzahl von Trainingsdaten jeweils zur dimensionellen Messung des Trainingsobjektes erfasst wurde, und wobei die Mess-Bilddaten des Messbildes zur dimensionellen Messung des Messobjekts erfasst werden.

3. Verfahren nach Anspruch 1 oder 2, das ferner den Schritt aufweist:
- Ermitteln (S400) von Kantenfindungsparameter-Einstellungen zur Erkennung der zumindest einen Objektkante (44) des Messobjekts (14) in dem Messbild (46) aufgrund des ermittelten Kantenfindungsmodells.

4. Verfahren nach einem der Ansprüche 1 bis 3, wobei das Kantenfindungsmodell ferner auf Basis von Homogenitäts-, Farb-, Kontrast- und/oder Helligkeitseigenschaften des Messbildes (46) ermittelt wird.

5. Verfahren nach Anspruch 4, wobei die empfangenen Messbilddaten des Messbildes (46) mehrere Bildausschnitte (48, 50) aufweisen, für die jeweils ein separates Kantenfindungsmodell auf Basis der Homogenitäts-, Farb-, Kontrast- und/oder Helligkeitseigenschaften des jeweiligen Bildausschnitts (48, 50) ermittelt wird.

6. Verfahren nach einem der Ansprüche 1 bis 5, wobei das maschinengestützte Lernen einen Algorithmus auf Basis eines neuronalen Netzes aufweist.

7. Verfahren nach einem der Ansprüche 1 bis 6, wobei die Vielzahl von Trainingsdaten von Bildern (42) vor deren Empfangen durch eine Person gekennzeichnet wird, so dass die Person zu jedem Bild (42) die Trainings-Kantenfindungsparameter ermittelt, durch die die Vielzahl von Objektkanten (44) des Trainingsobjekts (43) identifiziert wird.

8. Verfahren nach einem der Ansprüche 1 bis 7, wobei die Ermittlung des Kantenfindungsmodells unter Anwendung eines Sobel-Operators, eines Scharr-Operators, eines Laplace-Filters, eines Prewitt-Operators, eines Roberts-Operators, eines Kirsch-Operators, eines Canny-Algorithmus, eines Marr-Hildreth-Operators, eines Kontrastverstärkers, einer aktiven Kontur und/oder eines Extremalspannenfilters durchgeführt wird.

9. Computerprogrammprodukt mit Programmcode, der dazu eingerichtet ist, ein Verfahren nach einem der Ansprüche 1 bis 8 auszuführen, wenn der Programmcode auf einem Computer ausgeführt wird.

10. Vorrichtung zur Kantenfindung von Objektkanten (44) eines Messobjektes (14) auf Basis von Bilddaten, wobei die Vorrichtung (200) eine Auswerte- und Steuereinheit (34) aufweist, die dazu eingerichtet ist,
- eine Vielzahl von Trainingsdaten von Bildern (42), die jeweils von einem Trainingsobjekt (43) erfasst wurden, zu empfangen, wobei das Trainingsobjekt (43) eine Vielzahl von Objektkanten (44) aufweist, die auf Basis von Trainings-Kantenfindungsparametern identifiziert sind;
- Messbilddaten eines Messbildes (46) zu empfangen, das zur Auswertung des Messobjekts (14) erfasst wird, wobei das Messobjekt (14) eine Vielzahl von Objektkanten (44) aufweist; und
- ein Kantenfindungsmodell zur Kantenfindung zumindest einer der Objektkanten (44) des Messobjekts (14) in dem Messbild (46) auf Basis der Vielzahl von Trainingsdaten mittels maschinengestützten Lernens zu ermitteln.

11. Vorrichtung nach Anspruch 10, wobei die Auswerte- und Steuereinheit (34) dazu eingerichtet ist, die Vielzahl von Trainingsdaten von Bildern (42) zu empfangen, die jeweils zur dimensionellen Messung des Trainingsobjektes erfasst wurden, die Mess-Bilddaten des Messbildes zu empfangen, das zur dimensionellen Messung des Messobjekts erfasst wird.

12. Vorrichtung nach Anspruch 10 oder 11, wobei die Auswerte- und Steuereinheit (34) ferner dazu eingerichtet ist, Kantenfindungsparameter-Einstellungen zur Erkennung der Objektkanten (44) des Messobjekts (14) in dem Messbild aufgrund des ermittelten Kantenfindungsmodells zu ermitteln.

13. Vorrichtung nach einem der Ansprüche 10 bis 12, wobei die Auswerte- und Steuereinheit (34) ferner dazu eingerichtet ist, das Kantenfindungsmodell ferner auf Basis von Homogenitäts-, Farb-, Kontrast- und/oder Helligkeitseigenschaften des Messbildes (46) zu ermitteln.

14. Vorrichtung nach Anspruch 12, wobei die empfangenen Messbilddaten des Messbildes (46) mehrere Bildausschnitte (48, 50) aufweisen und die Auswerte- und Steuereinheit (34) dazu eingerichtet ist, jeweils ein Kantenfindungsmodell auf Basis der Homogenitäts-, Farb-, Kontrast- und/oder Helligkeitseigenschaften des jeweiligen Bildausschnitts (48, 50) zu ermitteln.

15. Vorrichtung nach einem der Ansprüche 10 bis 14, wobei das maschinengestützte Lernen einen Algorithmus auf Basis eines neuronalen Netzes aufweist.

16. Vorrichtung nach einem der Ansprüche 10 bis 15, wobei die Auswerte- und Steuereinheit (34) dazu eingerichtet ist, die Ermittlung des Kantenfindungsmodells unter Anwendung eines Sobel-Operators, eines Scharr-Operators, eines Laplace-Filters, eines Prewitt-Operators, eines Roberts-Operators, eines Kirsch-Operators, eines Canny-Algorithmus, eines Marr-Hildreth-Operators, eines Kontrastverstärkers, einer aktiven Kontur und/oder eines Extremalspannenfilters durchzuführen.

17. Messgerät zum dimensionellen Messen des Messobjekts (14), wobei das Messgerät (100) die Vorrichtung (200) gemäß einem der Ansprüche 10 bis 16 und einen Messsensor (38) zur Erfassung der Bilddaten aufweist.

## Geänderte Patentansprüche

### Geänderte Patentansprüche gemäss Regel 137(2) EPÜ.

1. Verfahren zur Kantenfindung von Objektkanten (44) eines Messobjektes (14) auf Basis von Bilddaten, das die Schritte aufweist:
- Empfangen (S100) einer Vielzahl von Trainingsdaten von Bildern (42), die jeweils von einem Trainingsobjekt (43) erfasst wurden, wobei das Trainingsobjekt (43) eine Vielzahl von Objektkanten (44) aufweist, die auf Basis von Trainings-Kantenfindungsparametern identifiziert sind;
- Empfangen (S200) von Messbilddaten eines Messbildes (46), das zur Auswertung des Messobjekts (14) erfasst wird, wobei das Messobjekt (14) eine Vielzahl von Objektkanten (44) aufweist;
- Ermitteln (S300) eines Kantenfindungsmodells zur Kantenfindung zumindest einer der Objektkanten (44) des Messobjekts (14) in dem Messbild (46) auf Basis der Vielzahl von Trainingsdaten mittels maschinengestützten Lernens, wobei das maschinengestützte Lernen einen Algorithmus auf Basis eines neuronalen Netzes aufweist, und wobei das Kantenfindungsmodell ferner auf Basis von Homogenitäts-, Farb-, Kontrast- und/oder Helligkeitseigenschaften des Messbildes (46) ermittelt wird; und
- Ermitteln (S400) von Kantenfindungsparameter-Einstellungen zur Erkennung der zumindest einen Objektkante (44) des Messobjekts (14) in dem Messbild (46) aufgrund des ermittelten Kantenfindungsmodells.

2. Verfahren nach Anspruch 1, wobei die Vielzahl von Trainingsdaten jeweils zur dimensionellen Messung des Trainingsobjektes erfasst wurde, und wobei die Mess-Bilddaten des Messbildes zur dimensionellen Messung des Messobjekts erfasst werden.

3. Verfahren nach Anspruch 1 oder 2, wobei die empfangenen Messbilddaten des Messbildes (46) mehrere Bildausschnitte (48, 50) aufweisen, für die jeweils ein separates Kantenfindungsmodell auf Basis der Homogenitäts-, Farb-, Kontrast- und/oder Helligkeitseigenschaften des jeweiligen Bildausschnitts (48, 50) ermittelt wird.

4. Verfahren nach einem der Ansprüche 1 bis 3, wobei die Vielzahl von Trainingsdaten von Bildern (42) vor deren Empfangen durch eine Person gekennzeichnet wird, so dass die Person zu jedem Bild (42) die Trainings-Kantenfindungsparameter ermittelt, durch die die Vielzahl von Objektkanten (44) des Trainingsobjekts (43) identifiziert wird.

5. Verfahren nach einem der Ansprüche 1 bis 4, wobei die Ermittlung des Kantenfindungsmodells unter Anwendung eines Sobel-Operators, eines Scharr-Operators, eines Laplace-Filters, eines Prewitt-Operators, eines Roberts-Operators, eines Kirsch-Operators, eines Canny-Algorithmus, eines Marr-Hildreth-Operators, eines Kontrastverstärkers, einer aktiven Kontur und/oder eines Extremalspannenfilters durchgeführt wird.

6. Computerprogrammprodukt mit Programmcode, der dazu eingerichtet ist, ein Verfahren nach einem der Ansprüche 1 bis 5 auszuführen, wenn der Programmcode auf einem Computer ausgeführt wird.

7. Vorrichtung zur Kantenfindung von Objektkanten (44) eines Messobjektes (14) auf Basis von Bilddaten, wobei die Vorrichtung (200) eine Auswerte- und Steuereinheit (34) aufweist, die dazu eingerichtet ist,
- eine Vielzahl von Trainingsdaten von Bildern (42), die jeweils von einem Trainingsobjekt (43) erfasst wurden, zu empfangen, wobei das Trainingsobjekt (43) eine Vielzahl von Objektkanten (44) aufweist, die auf Basis von Trainings-Kantenfindungsparametern identifiziert sind;
- Messbilddaten eines Messbildes (46) zu empfangen, das zur Auswertung des Messobjekts (14) erfasst wird, wobei das Messobjekt (14) eine Vielzahl von Objektkanten (44) aufweist;
- ein Kantenfindungsmodell zur Kantenfindung zumindest einer der Objektkanten (44) des Messobjekts (14) in dem Messbild (46) auf Basis der Vielzahl von Trainingsdaten mittels maschinengestützten Lernens zu ermitteln, wobei das maschinengestützte Lernen einen Algorithmus auf Basis eines neuronalen Netzes aufweist;
wobei die Auswerte- und Steuereinheit (34) ferner dazu eingerichtet ist,
- das Kantenfindungsmodell ferner auf Basis von Homogenitäts-, Farb-, Kontrast- und/oder Helligkeitseigenschaften des Messbildes (46) zu ermitteln; und
- Kantenfindungsparameter-Einstellungen zur Erkennung der Objektkanten (44) des Messobjekts (14) in dem Messbild aufgrund des ermittelten Kantenfindungsmodells zu ermitteln.

8. Vorrichtung nach Anspruch 7, wobei die Auswerte- und Steuereinheit (34) dazu eingerichtet ist, die Vielzahl von Trainingsdaten von Bildern (42) zu empfangen, die jeweils zur dimensionellen Messung des Trainingsobjektes erfasst wurden, die Mess-Bilddaten des Messbildes zu empfangen, das zur dimensionellen Messung des Messobjekts erfasst wird.

9. Vorrichtung nach Anspruch 7 oder 8, wobei die empfangenen Messbilddaten des Messbildes (46) mehrere Bildausschnitte (48, 50) aufweisen und die Auswerte- und Steuereinheit (34) dazu eingerichtet ist, jeweils ein Kantenfindungsmodell auf Basis der Homogenitäts-, Farb-, Kontrast- und/oder Helligkeitseigenschaften des jeweiligen Bildausschnitts (48, 50) zu ermitteln.

10. Vorrichtung nach einem der Ansprüche 7 bis 9, wobei die Auswerte- und Steuereinheit (34) dazu eingerichtet ist, die Ermittlung des Kantenfindungsmodells unter Anwendung eines Sobel-Operators, eines Scharr-Operators, eines Laplace-Filters, eines Prewitt-Operators, eines Roberts-Operators, eines Kirsch-Operators, eines Canny-Algorithmus, eines Marr-Hildreth-Operators, eines Kontrastverstärkers, einer aktiven Kontur und/oder eines Extremalspannenfilters durchzuführen.

11. Messgerät zum dimensionellen Messen des Messobjekts (14), wobei das Messgerät (100) die Vorrichtung (200) gemäß einem der Ansprüche 7 bis 10 und einen Messsensor (38) zur Erfassung der Bilddaten aufweist.
